Europäisches Patentamt

European Patent Office

Office européen des brevets

(11) Veröffentlichungsnummer: **0 294 830 B1**

# (12) EUROPÄISCHE PATENTSCHRIFT

(45) Veröffentlichungstag der Patentschrift: **15.04.92**

(21) Anmeldenummer: **88109278.7**

(22) Anmeldetag: **10.06.88**

(51) Int. Cl.5: **C03C 17/25**, C03C 17/22

(54) Verfahren zur Herstellung von Gläsern mit erhöhter Bruchfestigkeit.

(30) Priorität: **10.06.87 DE 3719339**

(43) Veröffentlichungstag der Anmeldung:
**14.12.88 Patentblatt 88/50**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**EP-A- 0 072 995**

**JOURNAL OF NON-CRYSTALLINE SOLIDS,
Band 82, Nr. 1/3, Juni 1986, Seiten 349-355,
Elsevier Science Publishers B.V., Amsterdam, NL; B.D. FABES et al.: "Strengthening
of silica glass by gel-derived coatings"**

**CHEMICAL ABSTRACTS, Band 106, Nr. 20, 18.
Mai 1987, Seite 320, Zusammenfassung Nr.
161369z, Columbus, Ohio, US; & ES-A-545
691 (CONSEJO SUPERIOR DE INVESTIGA-
CIONES CIENTIFICAS) 16-04-1986**

**PHYSICS AND CHEMISTRY OF GLASSES,
Band 25, Nr. 5, Oktober 1984, Seiten 134-141,**

**Huddersfield, GB; I. STRAWBRIDGE et al.:
"Characterisation of alkali aluminoborosilicate glass films prepared by the sol-gel process on window glass substrates"**

**H.K. PULKER: "Coatings on glass", 1984, Seiten 96-116,391-395, Elsevier, Amsterdam, NL**

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

(72) Erfinder: **Strehlow, Peter, Dr.
Steinburgstrasse 89
W-8700 Würzburg(DE)**
Erfinder: **Schmidt, Helmut, Dr.
Badstrasse 2
W-8705 Zellingen(DE)**

(74) Vertreter: **Barz, Peter, Dr. et al
Patentanwälte Dipl.-Ing. G. Dannenberg Dr.
P. Weinhold, Dr. D. Gudel Dipl.-Ing. S. Schubert, Dr. P. Barz Siegfriedstrasse 8
W-8000 München 40(DE)**

**Beschreibung**

Die Erfindung betrifft ein Verfahren zur Herstellung von Gläsern mit erhöhter Bruchfestigkeit.

Die Festigkeit von Glas wird hauptsächlich durch den Zustand der Glasoberfläche bestimmt. Für niedrige Glasfestigkeiten sind in erster Linie Oberflächendefekte verantwortlich, die zu Mikrorissen und schließlich zum Bruch des Glases führen.

Um die Bruchfestigkeit von Glas zu erhöhen, sind verschiedene Methoden bekannt, die auf der Erzeugung von Druckspannungen an der Glasoberfläche beruhen, beispielsweise durch thermisches Abschrecken oder Ionenaustausch. Diese Methoden sind jedoch aufwendig, erfordern hohe Behandlungstemperaturen und lange Austauschzeiten.

Es ist auch bereits bekannt, daß durch Aufbringen von Druckspannungsschichten auf Glasoberflächen die Festigkeit des Glases deutlich erhöht werden kann. Der Effekt dieser Druckspannungsschichten besteht darin, daß die zur Rißbildung führenden Oberflächendefekte erst bei wesentlich höherer Biegebelastung zum Bruch führen als im Falle von unbeschichteten Gläsern, die keiner Druckspannung unterliegen. Diese Druckspannungsschichten, deren Dicke gewöhnlich 10 bis 50 $\mu$m beträgt, werden in der Praxis gelegentlich für Spezialgläser angewandt. Das Verfahren des Ionenaustausches hat jedoch den Nachteil, daß es sehr langwierig ist und manchmal mehrere Stunden beansprucht. Außerdem muß in Salzschmelzen zwischen 300 und 500°C gearbeitet werden,weshalb sich das Verfahren in der Praxis für Massengläser nicht durchsetzen konnte. In Fällen, in denen eine Schicht aus einem Glas mit geringerer thermischer Ausdehnung auf das Grundglas aufgebracht wird, besteht darüber hinaus die Gefahr einer Erweichung des Grundglases, da Gläser mit geringer thermischer Ausdehnung in der Regel eine höhere Transformationstemperatur Tg haben. Hierdurch verliert das Grundglas seine Formbeständigkeit. Bei Anwendung eines Pulver-Sprayverfahrens sind die Temperaturen, bei denen die Formbeständigkeit des Grundglases noch gewährleistet ist, nicht ausreichend für eine homogene Verglasung der Beschichtung, und es kommt zur Bildung einer Orangenhaut.

B.D. Fabes et al. beschreiben in J. Noncryst. Solids 82 (1/3), 349-355 (1986) ein Verfahren, bei die Festigkeit eines Grundglases dadurch gesteigert wird, daß Sol-Gel-Überzüge, die z. B. aus $SiO_2$ oder $SiO_2/TiO_2$ bestehen können, auf das Grundglas aufgebracht und thermisch bei 100 bis 900°C verdichtet werden.

Aufgabe der Erfindung ist es, ein Verfahren zur Herstellung von Gläsern mit erhöhter Festigkeit, insbesondere Bruchfestigkeit, zur Verfügung zu stellen, das einfach und schnell durchführbar und für den großtechnischen Einsatz geeignet ist.

Gegenstand der Erfindung ist ein Verfahren zur Herstellung von Gläsern mit erhöhter Bruchfestigkeit, bei dem

(a) auf das Grundglas eine Beschichtung aus einer Zusammensetzung aufgebracht wird, die nach dem Sol-Gel-Verfahren erhalten worden ist durch Hydrolyse und Kondensation von im Reaktionsmedium löslichen Verbindungen mindestens eines Elementes aus der Gruppe Si, Al, Ti und Zr gegebenenfalls in Kombination mit im Reaktionsmedium löslichen Verbindungen mindestens eines Elementes aus der Gruppe der Alkalimetalle, Erdalkalimetalle und Bor in einem Lösungsmittel und

(b) die erhaltene Beschichtung thermisch verdichtet wird,

das dadurch gekennzeichnet ist, daß die Beschichtungszusammensetzung zu einem Aerosol zerstäubt und die Aerosol-Partikel auf ein Grundglas abgeschieden werden, das bei einer Temperatur im Transformationsbereich der Beschichtungszusammensetzung, jedoch unterhalb seiner Transformationstemperatur, gehalten wird.

Überraschenderweise hat sich gezeigt, daß die erfindungsgemäßen, nach dem sogenannten Sol-Gel-Verfahren hergestellten Beschichtungen eine Festigkeitserhöhung des behandelten Glases bis zum Faktor 4 ermöglichen, auch wenn diese Beschichtungen nur einige Mikron stark sind. Selbst bei Beschichtungen von 0,1 $\mu$m Dicke konnte eine Festigkeitserhöhung um den Faktor 2 festgestellt werden. Daß mit solch dünnen Schichten ein derart ausgeprägter Effekt erzielt werden kann, war nicht vorhersehbar und beruht vermutlich auf dem günstigen Zusammenwirken mehrerer Mechanismen.

Derzeit wird angenommen, daß zum einen ein Rißheilungseffekt und zum anderen ein Druckspannungseffekt vorliegen. Während der erstgenannte Effekt die für die niedrige Ausgangsfestigkeit verantwortlichen Oberflächendefekte und Mikrorisse beseitigt, bewirkt der letztgenannte Effekt eine Festigkeitserhöhung bei Verwendung einer Beschichtungszusammensetzung mit geringerem thermischem Ausdehnungskoeffizienten als das Grundglas, indem sich bei Verdichten der glasartig erstarrten Beschichtung eine Druckspannung an der Glasoberfläche aufbaut.

Als Ausgangsverbindungen für die Beschichtungszusammensetzung eignen sich im Reaktionsmedium lösliche Verbindungen der genannten Elemente, z.B. Hydroxide, Alkoxide, Halogenide (Fluoride, Chloride, Bromide, Jodide), Säuren, Salze mit organischen oder anorganischen Säuren oder Basen und Komplexverbindungen.

Spezielle Beispiele sind Hydroxide, wie NaOH, KOH, $Mg(OH)_2$, $Ca(OH)_2$ und $Al(OH)_3$; hydrolysierbare Alkoxide, wie NaOR, KOR, $Mg(OR)_2$, $Ca(OR)_2$, $Al(OR)_3$, $B(OR)_3$, $Si(OR)_4$, $RSi(OR)_3$, $R_2Si(OR)_2$, $Ti(OR)_4$ und $Zr(OR)_4$, wobei R eine geradkettige oder verzweigte, substituierte oder unsubstituierte Alkylgruppe mit 1 bis 6 Kohlenstoffatomen ist; Halogenide, wie NaCl, KBr, $CaCl_2$, $SiCl_4$, $RSiCl_3$, $R_2SiCl_2$, $TiCl_4$ und $ZrCl_4$; Säuren, wie Borsäure, Salze, wie Borate, Nitrate, Phosphate, Carboxylate, z.B. Formiate, Acetate, basische Acetate oder Benzoate, und Phenolate; sowie Komplexverbindungen, wie Acetylacetonate und Salicylate.

Die Ausgangsverbindungen werden in Wasser oder einem organischen Lösungsmittel oder einer Mischung aus Wasser und einem damit mischbaren organischen Lösungsmittel gelöst und der hydrolytischen Polykondensation unterworfen. Organische Lösungsmittel sind im Hinblick auf die erzielbaren besseren Beschichtungseigenschaften bevorzugt, wobei mit Wasser zumindest teilweise mischbare Lösungsmittel besonders bevorzugt sind. Beispiele für geeignete organische Lösungsmittel sind ein- oder mehrwertige Alkohole, wie Methanol, Ethanol, n-Propanol, Isopropanol, n-Butanol, tert-Butanol, Glykol oder Glycerin, Ether, wie Dimethoxyethan, Tetrahydrofuran oder Ethylenglykolmonomethylether, Ester, wie Dimethylglykolacetat, Ketone, wie Aceton oder Methylethylketon, Kohlenwasserstoffe, wie Benzol oder Toluol, Halogenkohlenwasserstoffe, wie Kohlenstofftetrachlorid, und Dimethylformamid.

Die Hydrolyse und Polykondensation kann in einem Schritt in Gegenwart mindestens der zur vollständigen Hydrolyse der vorhandenen hydrolysierbaren Gruppen stöchiometrisch erforderlichen Wassermenge durchgeführt werden. Alternativ kann man zunächst eine Vorkondensation in Gegenwart einer geringeren Wassermenge als der zur vollständigen Hydrolyse der vorhandenen hydrolysierbaren Gruppen stöchiometrisch erforderlichen Menge und anschließend eine Weiterkondensation unter Zugabe mindestens der Wassermenge, die zur Hydrolyse der verbliebenen hydrolysierbaren Gruppen erforderlich ist, durchführen.

Die Polykondensation kann gegebenenfalls in Gegenwart eines Kondensationskatalysators durchgeführt werden, z.B. einer Protonen oder Hydroxylionen abspaltenden Verbindung oder eines Amins. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. NaOH, KOH oder $Ca(OH)_2$ und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 5 Mol/Liter betragen.

Die Konzentration der Ausgangsverbindungen, bezogen auf das Lösungsmittel, wird so eingestellt, daß eine für die anschließende Beschichtung geeignete Viskosität der Beschichtungslösung gewährleistet ist. Die Mengenverhältnisse der Ausgangsverbindungen untereinander werden so abgestimmt, daß die nach der thermischen Verdichtung schließlich erhaltene Beschichtung ein glasartig erstarrtes Oxidsystem darstellt, dessen thermischer Ausdehnungskoeffizient vorzugsweise niedriger ist als der des Grundglases. Wie vorstehend erläutert wurde, tritt in diesem Fall eine Festigkeitserhöhung aufgrund des Druckspannungseffektes an der Glasoberfläche auf. Der thermische Ausdehnungskoeffizient kann zu diesem Zweck z.B. in an sich bekannter Weise durch Variation des Alkaligehaltes der Beschichtungszusammensetzung geeignet eingestellt werden. Im Rahmen der Erfindung ist es jedoch auch möglich, Beschichtungen mit einem höheren thermischen Ausdehnungskoeffizienten als dem des Grundglases anzuwenden. In diesem Fall beruht die Festigkeitserhöhung allein auf dem genannten Rißheilungseffekt.

Die Hydrolyse und teilweise Kondensation wird üblicherweise bei Raumtemperatur durchgeführt, jedoch können auch höhere Temperaturen, vorzugsweise bis zum Siedepunkt des verwendeten Lösungsmittel angewandt werden.Die Reaktionsbedingungen werden so eingestellt, daß die für die Beschichtungslösung gewünschte Viskosität von 2 bis 5 mPas möglichst über einen langen Zeitraum konstant bleibt.

Die erhaltene Beschichtungslösung wird zu einem Aerosol zerstäubt und die auf diese Weise erzeugten Aerosol-Partikel werden auf das Grundglas niedergeschlagen. Zur Zerstäubung der Beschichtungslösung eignen sich herkömmliche Vorrichtungen, z.B. Luftbürsten und Sprüheinrichtungen mit einer oder mehreren Sprühdüsen. Die Aerosol-Beschichtung kann bei Normaltemperatur oder erhöhter Temperatur durchgeführt werden. Wegen der möglichen Explosionsgefahr sind bei erhöhter Temperatur wässrige Beschichtungslösungen bevorzugt.

Die Beschichtungslösung wird gewöhnlich in einer Menge aufgetragen, daß die Schichtdicke der erhaltenen Gelschicht etwa 0,05 bis 10 $\mu$m, vorzugsweise 0,1 bis 6 $\mu$m und insbesondere 0,1 bis 1 $\mu$m beträgt.

Beim Aufbringen auf das Grundglas wird die Beschichtung verdichtet, wobei sich die Schichtdicke bis auf maximal die Hälfte ihres ursprünglichen Wertes verringert.

Das erfindungsgemäße Verfahren eignet sich insbesondere zum Beschichten von Hohlglas, z.B.

EP 0 294 830 B1

Flaschen. Das im heißen Zustand aus dem Formungsprozeß kommende Glas kann direkt beschichtet werden, so daß sich ein umständliches Abkühlen des Rohglases, Beschichten und erneutes Wärmebehandeln des beschichteten Glases erübrigt.

Bei Beschichtungszusammensetzungen, die einen ähnlichen Transformationsbereich wie handelsübliche Grundgläser aufweisen (z.B. 500 bis 600°C), genügt eine Wärmebehandlung bei einer Temperatur innerhalb des Transformationsbereiches.

Der vorstehend beschriebene Behandlungszyklus aus Beschichten und Verdichten kann gegebenenfalls ein- oder mehrmals wiederholt werden, um Mehrfach-Beschichtungen auszubilden. Hierdurch läßt sich eine besonders ausgeprägte Festigkeitserhöhung erzielen.

Das erfindungsgemäße Verfahren eignet sich zur Behandlung beliebiger Grundgläser. Typische Beispiele sind handelsübliche Gläser, wie Natronkalkglas und Borosilikatgläser, z.B. Natrium- oder Natriumaluminoborosilikatglas. Das Grundglas kann in beliebiger Form vorliegen, z.B. als Platten, Stäbe, Behälter oder Flaschen.

Von besonderem Interesse ist das erfindungsgemäße Verfahren für die Behandlung von Gläsern mit niedriger Festigkeit, z.B. Behälterglas. Es wird nicht nur eine generelle Festigkeitserhöhung erzielt, sondern auch die statistische Festigkeitverteilung der behandelten Gläser wird durch die erfindungsgemäße Beschichtung enger.

Die folgenden Beispiele erläutern die Erfindung, ohne sie zu beschränken.

**Beispiel 1**

Herstellung einer $Na_2O/SiO_2$- Beschichtungszusammensetzung

Natriumsilikat-Beschichtungen der in der folgenden Tabelle 1 genannten Zusammensetzung werden dadurch hergestellt, daß man entsprechende Mengen Tetraethoxysilan und Natriummethylat in Methanol mit Wasser in kleinen Anteilen unter Rühren versetzt. Die erhaltenen klaren Lösungen können bis zu 4 Stunden zum Beschichten verwendet werden.

**Beispiel 2**

Herstellung einer $SiO_2/B_2O_3/Na_2O$-Beschichtungszusammensetzung

Natriumborosilikat-Beschichtungen werden nach zwei verschiedenen Methoden hergestellt:
(1) 9,8 ml Tetramethoxysilan werden in 90 ml Methanol gelöst. Daneben wird eine Lösung von 1,33 g Borsäure in 10 ml Methanol hergestellt. Die Borsäurelösung und 4,8 ml Wasser werden zu der Tetramethoxysilanlösung gegeben. Die erhaltene Mischung wird 1,5 Stunden in einem geschlossenen Behälter bei Raumtemperatur gerührt und schließlich mit 0,33 g Natriumhydroxid in 1 ml Wasser versetzt.
(2) 19,6 ml Tetraethoxysilan in 40 ml Methanol werden mit 2,87 ml Wasser und 2 ml 1N Salzsäure vermischt. Nachdem 1,5 Stunden gerührt worden ist, gibt man 11,58 ml Borsäuretributylester, 2,32 ml Wasser und 40 ml Methanol zu. Schließlich werden 0,66 g Natriumhydroxid in 6 ml Wasser zugetropft.

Die erhaltenen Lösungen sind klar und etwa 30 Minuten stabil und können während dieser Zeit zum Beschichten verwendet werden.

**Beispiel 3**

Herstellung einer $SiO_2/B_2O_3/Al_2O_3/Na_2O$-Beschichtungszusammensetzung

1,43 g Borsäure werden in 47,66 g Ethanol gelöst und mit 27,38 g Tetraethoxysilan, 2,50 g Wasser und 0,22 g 1N Salzsäure vermischt und 30 Minuten gerührt. Daneben wird eine Lösung von 5,30 g Borsäuretributylester, 0,48 g Aluminiumtributoxid und 2 g Ethanol hergestellt. Beide Lösungen werden miteinander vermischt und die Mischung wird 5 Minuten bei 25°C gerührt. Schließlich tropft man 0,65 g Natriumhydroxid in 3,00 g Wasser zu. Nach weiterem Rühren für 2 Stunden erhält man eine klare Lösung, die 20 Stunden stabil ist und zur Beschichtung verwendet werden kann.

**Beispiel 4**

Herstellung einer $SiO_2/B_2O_3/Al_2O_3/K_2O$-Beschichtungszusammensetzung

4

Das Verfahren von Beispiel 3 wird wiederholt, jedoch verwendet man Kaliumhydroxid anstelle von Natriumhydroxid.

In der folgenden Tabelle 1 sind die Beschichtungszusammensetzungen aus den Beispielen 1 bis 4, die verwendeten Ausgangsmaterialien und Lösungsmittel sowie die Transformationstemperaturen und thermischen Ausdehnungskoeffizienten der beim Verdichten dieser Beschichtungszusammensetzungen entstehenden Glassysteme angegeben.

Beispiel 5

T A B E L L E  1

| Beispiel Nr. | Zusammensetzung (Gew.-%) | | | | | | Ausgangs-material | Lösungs-mittel | Transformations-temperatur $T_g$ (°C) | Therm. Ausdehnung des Glases $\alpha_{20/100}$ ($10^{-6}$ $K^{-1}$) |
|---|---|---|---|---|---|---|---|---|---|---|
| | $SiO_2$ | $TiO_2$ | $B_2O_3$ | $Al_2O_3$ | $Na_2O$ | $K_2O$ | | | | |
| 1 | 75 | – | – | – | 25 | – | $Si(OC_2H_5)_4$ $NaOCH_3$ | $CH_3OH$ | 430 | 11.0 |
| | 80 | – | – | – | 20 | – | | | 455 | 9.5 |
| | 85 | – | – | – | 15 | – | | | 460 | 8.0 |
| | 90 | – | – | – | 10 | – | | | 485 | 5.8 |
| 2 | 80 | – | 15 | – | 5 | – | $Si(OCH_3)_4$ $H_3BO_3$ NaOH | $CH_3OH$ | 530 | 3.2 |
| | | | | | | | $Si(OC_2H_5)_4$ $B(OC_4H_9)_3$ NaOH | $CH_3OH$ | | |
| 3 | 79 | – | 15 | 1 | 5 | – | $Si(OC_2H_5)_4$ $B(OC_4H_9)_3$ $H_3BO_3$ $Al(OC_4H_9)_3$ NaOH | $C_2H_5OH$ | 535 | 3.3 |
| 4 | 79 | – | 15 | 1 | – | 5 | $Si(OC_2H_5)_4$ $B(OC_4H_9)_3$ $H_3BO_3$ $Al(OC_4H_9)_3$ KOH | $C_2H_5OH$ | 540 | 3.5 |

Wässrige Natriumborosilikat-Sole werden durch Vermischen von 2,66 g Borsäure, gelöst in 200 ml Wasser, mit 20,27 g Tetramethoxysilan hergestellt. Die Lösung wird 15 Minuten gerührt. Hierauf gibt man 0,66 g Natriumhydroxid, gelöst in 20 ml Wasser, zu. Das Sol entspricht einer chemischen Oxidzusammensetzung $SiO_2 : Na_2O : B_2O_3 = 80 : 5 : 15$ Gewichtsprozent.

Das hergestellte Natriumborosilikat-Sol wird mit einem automatischen Luftbürstensystem mit Druckluft von 1,3 bar zu einem Aerosol mit einer Teilchengröße im Bereich von 3 bis 8 nm versprüht. Die Aerosol-Partikel werden in einem Sprühabstand von 85 cm 2 Sekunden lang auf eine 600°C heiße Floatglasplatte niedergeschlagen.

Während die durchschnittliche Biegebruchfestigkeit $\overline{\sigma}_B$ der unbehandelten Glasplatte 139 MPa beträgt, wird für die beschichtete Platte ein Wert von 275 MPa gemessen.

## Patentansprüche

1. Verfahren zur Herstellung von Gläsern mit erhöhter Bruchfestigkeit, bei dem
   (a) auf das Grundglas eine Beschichtung aus einer Zusammensetzung aufgebracht wird, die nach dem Sol-Gel-Verfahren erhalten worden ist durch Hydrolyse und Kondensation von im Reaktionsmedium löslichen Verbindungen mindestens eines Elementes aus der Gruppe Si, Al, Ti und Zr gegebenenfalls in Kombination mit im Reaktionsmedium löslichen Verbindungen mindestens eines Elementes aus der Gruppe der Alkalimetalle, Erdalkalimetalle und Bor in einem Lösungsmittel und
   (b) die erhaltene Beschichtung thermisch verdichtet wird,
   dadurch gekennzeichnet, daß die Beschichtungszusammensetzung zu einem Aerosol zerstäubt und die Aerosol-Partikel auf ein Grundglas abgeschieden werden, das bei einer Temperatur im Transformationsbereich der Beschichtungszusammensetzung, jedoch unterhalb seiner Transformationstemperatur, gehalten wird.

2. Verfahren nach Anspruch 1, dadurch gekennzeichnet, daß man die Hydrolyse und Kondensation in Stufe (a) in einem Schritt in Gegenwart mindestens der zur vollständigen Hydrolyse der vorhandenen hydrolysierbaren Gruppen stöchiometrisch erforderlichen Wassermenge durchführt.

3. Verfahren nach Anspruch 1, dadurch gekennzeichnet, daß man in Stufe (a) zunächst eine Vorkondensation in Gegenwart einer geringeren Wassermenge als der zur vollständigen Hydrolyse der vorhandenen hydrolysierbaren Gruppen stöchiometrisch erforderlichen Menge und anschließend eine Weiterkondensation unter Zugabe mindestens der Wassermenge, die zur Hydrolyse der verbliebenen hydrolysierbaren Gruppen erforderlich ist, durchführt.

4. Verfahren nach einem der Ansprüche 1 bis 3, dadurch gekennzeichnet, daß man als im Reaktionsmedium lösliche Ausgangsverbindungen Hydroxide, Alkoxide, Halogenide, Säuren, Salze oder Komplexe der genannten Elemente verwendet.

5. Verfahren nach einem der Ansprüche 1 bis 4, dadurch gekennzeichnet, daß man die Hydrolyse und Kondensation in Stufe (a) in Gegenwart eines sauren oder basischen Kondensationskatalysators durchführt.

6. Verfahren nach einem der Ansprüche 1 bis 5, dadurch gekennzeichnet, daß die aufgebrachte Beschichtung eine Schichtdicke von 0,1 bis 6 $\mu$m, vorzugsweise 0,1 bis 1 $\mu$m, hat.

7. Verfahren nach einem der Ansprüche 1 bis 6, dadurch gekennzeichnet, daß man das Grundglas in mehreren Beschichtungs/Verdichtungs-Zyklen mit einer Mehrfachschicht beschichtet.

## Claims

1. A process for producing glasses having an increased breaking strength, in which process
   (a) a coating is applied onto the base glass, which coating consists of a composition obtained according to the sol-gel-process by hydrolysis and condensation of compounds, soluble in the reaction medium, of at least one element selected from Si, Al, Ti and Zr, optionally in combination with compounds, soluble in the reaction medium, of at least one element selected from alkali metals, earth alkali metals and boron, in a solvent, and
   (b) the coating obtained is thermally densified,

characterized in that the coating composition is atomized to form an aerosol and the aerosol particles are deposited on the base glass which is kept at a temperature within the transformation range of the coating composition, but below the transformation temperature.

2. A process according to claim 1, wherein the hydrolysis and condensation in stage (a) are performed in a single step in the presence of at least the amount of water stoichiometrically required for the complete hydrolysis of the hydrolyzable groups present.

3. A process according to claim 1, wherein in stage (a) first a precondensation is carried out in the presence of an amount of water smaller than the amount stoichiometrically required for the complete hydrolysis of the hydrolyzable groups present, and subsequently a further condensation under addition of at least the amount of water required for the hydrolysis fo the remaining hydrolyzable groups.

4. A process according to any of claims 1 to 3, wherein hydroxides, alkoxides, halides, acids, salts or complexes of the elements mentioned are used as the starting compounds soluble in the reaction medium.

5. A process according to any of claims 1 to 4, wherein the hydrolysis and condensation in stage (a) are accomplished in the presence of an acid or basic condensation catalyst.

6. A process according to any of claims 1 to 5, wherein the coating applied has a layer thickness of from 0.1 to 6 $\mu$m, preferably of from 0.1 to 1 $\mu$m.

7. A process according to any of claims 1 to 6 wherein the base glass is coated with multiple layers in several coating/densification cycles.

**Revendications**

1. Procédé de fabrication de verres à plus grande résistance à la casse, du type selon lequel :
   a) un revêtement est appliqué sur le verre de base, dont la composition a été obtenue par le procédé sol-gel par hydrolyse et condensation de composés, solubles dans le milieu de réaction, d'au moins un élément du groupe Si, Al, Ti et Zr, le cas échéant, en combinaison avec des composés, solubles dans le milieu de réaction, d'au moins un élément du groupe des métaux alcalins, des métaux alcalino-terreux et de bore dans un solvant, et
   b) le revêtement obtenu est condensé thermiquement,
caractérisé en ce que la composition du revêtement est pulvérisée sous forme d'aérosol et les particules d'aérosol sont déposées sur un verre de base qui est maintenu à une température située dans le domaine de transformation de la composition du revêtement, toutefois, en dessous de sa température de transformation.

2. Procédé selon la revendication 1, carcactérisé en ce que l'hydrolyse et la condensation dans l'étape a) sont effectuées en une opération en présence d'au moins la quantité stöchiométrique d'eau nécessaire pour l'hydrolyse complète des groupes hydrolysables présents.

3. Procédé selon la revendication 1, caractérisé en ce que, dans l'étape a), on effectue d'abord une précondensation en présence d'une quantité d'eau inférieure à la quantité stoechiométrique nécessaire pour l'hydrolyse complète des groupes hydrolysables présents, et on effectue ensuite la condensation finale avec addition d'au moins la quantité d'eau nécessaire à l'hydrolyse des groupes hydrolysables restants.

4. Procédé selon l'une des revendications 1 à 3, caractérisé en qu'on utilise, comme composés de départ solubles dans le milieu de réaction , des hydroxydes, alcoxydes, halogénures, acides, sels ou complexes des éléments cités.

5. Procédé selon l'une des revendications 1 à 4, caractérisé en ce que l'hydrolyse et la condensation dans l'étape a) sont effectuées en présence d'un catalyseur de condensation acide ou basique.

6. Procédé selon l'une des revendications 1 à 5, caractérisé en ce que le revêtement appliqué a une épaisseur de couche de 0,1 à 6 $\mu$m, de préférence de 0,1 à 1 $\mu$m.

7. Procédé selon l'une des revendications 1 à 6, caractérisé en ce qu'une multicouche est appliquée sur le verre de base en plusieurs cycles de revêtement/condensation.